# EUROPÄISCHE PATENTANMELDUNG

(11) **EP 4 357 118 A1**
(43) Veröffentlichungstag der Anmeldung: **24.04.2024**
(21) Anmeldenummer: 23201945.5
(22) Anmeldetag: 05.10.2023
(51) Int. Cl.: B29D 30/00, B29D 30/48

(54) **VERFAHREN ZUM FÖRDERN VON ROHKERNEN UND ROHKERNFÖRDERER**

(30) Priorität: 18.10.2022 DE 102022210968
(71) Anmelder: Continental Reifen Deutschland GmbH, 30175 Hannover (DE)
(72) Erfinder: Corradini, Enrico, 30165 Hannover (DE); Werner, Lukas, 30165 Hannover (DE)
(74) Vertreter: Continental Corporation

(57) **Zusammenfassung**

Die Erfindung betrifft ein Verfahren zum Fördern von Rohkernen (5) von einem Rohkern-Materialträger (6) an eine Apexmaschine (7), wobei die Rohkerne (5) dem Rohkern-Materialträger (6) entnommen werden und einer Apexmaschine (7) zugeführt werden, wobei eine Verfahreinheit (3) die Rohkerne (5) dem Rohkern-Materialträger (6) entnimmt, und der Apexmaschine (7) zuführt. Weiterhin betrifft die Erfindung einen Rohrkernförderer zum Fördern von Rohkernen (5) an eine Apexmaschine (7) aufweisend eine an einem Aktor (2) gelagerte Verfahreinheit (3) zum Verfahren der Rohkerne (5), den Aktor (2) zum Verfahren der Verfahreinheit (3) sowie eine an der Verfahreinheit (3) angeordnete Aufnahmeeinheit (4) zum Fördern der Rohkerne (5).

## Beschreibung

Die Erfindung betrifft ein Verfahren zum Fördern von Rohkernen von einem Rohkern-Materialträger an eine Apexmaschine, wobei die Rohkerne dem Rohkern-Materialträger entnommen werden und einer Apexmaschine zugeführt werden. Weiterhin betrifft die Erfindung einen Rohkernförderer zum Fördern von Rohkernen von Rohkern-Materialträgern an eine Apexmaschine.

Bekannte Verfahren und Rohkernförderer zum Fördern von Rohkernen von Rohkern-Materialträgern an eine Apexmaschine sind beispielweise in Form eines in einer horizontalen Ebene rotationssymmetrisch angeordneten Kettenförderern bekannt. Die Kettenförderer werden manuell von einem Rohkern-Materialträger bestückt und geben die Rohkerne an die Apexmaschine ab.

Vor diesem Hintergrund liegt der Erfindung die Aufgabe zugrunde, ein Verfahren und einen Rohkernförderer derart auszuführen, dass der manuelle Aufwand verringert wird und der benötigte Bauraum zum Fördern der Rohkerne verringert wird.

Diese Aufgabe wird gelöst mit einem Verfahren gemäß den Merkmalen des Patentanspruches 1 sowie einem Rohkernförderer und einem Computerprogrammprodukt gemäß den nebengeordneten Ansprüchen. Die Unteransprüche betreffen besonders zweckmäßige Weiterbildungen der Erfindung.

Erfindungsgemäß ist also ein Verfahren zum Fördern von Rohkernen von einem Rohkern-Materialträger, der auch als Pin Truck bezeichnet wird, an eine Apexmaschine vorgesehen, wobei die Rohkerne dem Rohkern-Materialträger entnommen werden und der Apexmaschine zugeführt werden, wobei eine Verfahreinheit die Rohkerne dem Rohkern-Materialträger entnimmt, und der Apexmaschine zuführt.

Die Verfahreinheit kann in unterschiedlicher Form realisiert werden und beispielweise ein Industrieroboter sein. Durch das Entnehmen der Rohkerne vom Rohkern-Materialträger und dem Zuführen der Rohkerne zu der Apexmaschine durch die Verfahreinheit, kann ein manuelles Beladen eines Kettenförderers sowie der zu beladende Kettenförderer selbst entfallen.

Unter dem Zuführen der Rohkerne an die Apexmaschine wird ein unmittelbares Zuführen verstanden, insbesondere also ein Übergeben der Rohkerne direkt von der Verfahreinheit an die Apexmaschine, ohne dass ein Zwischenschritt oder ein weiteres Mittel benötigt wird.

Eine bevorzugte Ausführungsform sieht vor, dass die Verfahreinheit horizontal und vertikal zu den Rohkern-Materialträgern verfährt und bevorzugt automatisiert angepasst an eine variable Position der Rohkerne verfährt. Ein horizontales und auch vertikales Verfahren der Verfahreinheit ermöglicht es den Rohkern-Materialträgern Rohkerne zu entnehmen, auch wenn die Rohkerne auf dem Rohkern Materialträgern auf einer zu der Apexmaschine abweichenden Höhe gelagert werden. Insbesondere können auch Rohkern-Materialträgern, die Rohkerne in unterschiedlichen Höhen lagern, die Rohkerne entnommen werden. Unter horizontalem Verfahren wird das Verfahren in einer horizontalen Ebene verstanden, also das Verfahren in zwei voneinander unabhängigen Raumrichtungen.

Eine weitere bevorzugte Ausführungsform sieht vor, dass die Verfahreinheit mit Sensoren an die jeweilige Position der Rohkerne anlernbar ist und bevorzugt die Ausrichtung der Rohkerne automatisiert erfasst und einen Verfahrweg zum Aufnehmen der Rohkerne berechnet. Ein Anlernen der Verfahreinheit unter Nutzung von Sensoren vereinfacht die Anpassung des Verfahrens an unterschiedliche Geometrien von Rohkern-Materialträgern und Rohkernen. Der personelle Einsatz kann minimiert werden, wenn die Position und Ausrichtung der Rohkerne automatisiert erfasst wird.

Eine weitere bevorzugte Ausführungsform sieht vor, dass die Verfahreinheit eine Aufnahmeeinheit aufweist, die zur Ausrichtung der Rohkerne ausgerichtet wird. Es hat sich als vorteilhaft erwiesen, wenn die Verfahreinheit eine Aufnahmeeinheit aufweist, die relativ zur weiteren Verfahreinheit schwenkbar gelagert ist und zur Ausrichtung der Rohkerne ausgerichtet werden kann. Hierdurch können bei einer Vielzahl von Positionen und Ausrichtungen der Rohkerne die Rohkerne den Rohkern-Materialträgern entnommen werden.

Eine weitere bevorzugte Ausführungsform sieht vor, dass eine Vielzahl von bevorzugt zumindest fünf Rohkernen, weiter bevorzugt zumindest zehn Rohkernen, die zumindest teilweise aneinander anhaften, auf der Aufnahmeeinheit aufgenommen wird. Durch das Aufnehmen einer Vielzahl von zumindest teilweise aneinander anhaftenden Rohkernen durch die Aufnahmeeinheit wird ein besonders effizientes Fördern vom Rohkern-Materialträger zur Apexmaschine ermöglicht. Dadurch, dass aneinander anhaftende Rohkerne aufgenommen werden können, kann ein Separieren, beziehungsweise das separierte Lagern, der Rohkerne sowohl auf dem Rohkern-Materialträger, als auch auf der Aufnahmeeinheit entfallen, wodurch eine besonders hohe Lagerdichte von Rohkernen ermöglicht wird. Bevorzugt werden alle an der Lagerposition des Rohkern-Materialträger gelagerten Rohkerne auf einmal entnommen. Ein Verlust von Rohkernen während des Förderns, durch ein Anhaften aneinander und späteres Lösen von Rohkernen, kann vermieden werden.

Eine weitere bevorzugte Ausführungsform sieht vor, dass die Aufnahmeeinheit zwei horizontal angeordnete parallele Aufnahmen aufweist, die in ihrem Abstand zueinander an die Rohkerndurchmesser angepasst werden. Das Anpassen des Abstands der Aufnahmen ermöglicht eine Vielzahl von Rohkernen mit unterschiedlichen Durchmessern einem Rohkern-Materialträger besonders schonend zu entnehmen. Eine Kollision mit einem Rohkern-Materialträger kann durch das Anpassen des Abstandes der Aufnahmen vermieden werden.

Erfindungsgemäß ist ein Rohkernförderer zum Fördern von Rohkernen von Rohkern-Materialträgern an eine Apexmaschine, aufweisend eine an einem Aktor gelagerte Verfahreinheit zum Verfahren der Rohkerne, den Aktor zum Verfahren der Verfahreinheit sowie eine an der Verfahreinheit angeordnete Aufnahmeeinheit zum Fördern der Rohkerne, insbesondere zum Ausführen des erfindungsgemäßen Verfahrens, vorgesehen.

Durch einen derartigen Rohkernförderer kann ein manuelles Beladen eines Kettenförderers sowie der zu beladende Kettenförderer selbst entfallen. Eine besonders platzsparendes sowie im Betrieb kostengünstiges Fördern von Rohkernen wird ermöglicht.

Eine bevorzugte Ausführungsform sieht vor, dass die Aufnahmeeinheit ein Kettenspeicher ist, der bevorzugt zwei relativ zueinander verfahrbare Kettenförderer aufweist. Kettenspeicher als Aufnahmeeinheiten haben sich als kostengünstige, robuste sowie präzise zum Fördern von Rohkernen erwiesen.

Eine weitere bevorzugte Ausführungsform sieht vor, dass die Verfahreinheit horizontal in zwei voneinander unabhängige Raumrichtungen sowie vertikal antreibbar ist und bevorzugt in der Horizontalen zumindest in Teilbereichen schwenkbar gelagert und antreibbar ist. Durch die genannten Freiheitsgrade kann die Verfahreinheit Rohkerne in einer Vielzahl von Positionen und Ausrichtungen von einem Rohkern-Materialträger entnehmen.

Erfindungsgemäß ist ein Computerprogrammprodukt zum Fördern von Rohkernen von Rohkern-Materialträgern an eine Apexmaschine vorgesehen, umfassend Befehle, die bei der Ausführung des Programms durch zumindest eine Prozessoreinheit diese veranlasst das erfindungsgemäße Verfahren auszuführen. Durch das Ausführen des Computerprogrammprodukts wird ein Entnehmen der Rohkerne vom Rohkern-Materialträger und das Zuführen der Rohkerne zu der Apexmaschine durch Ausführen des erfindungsgemäßen Verfahrens ermöglicht.

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigen in
Fig. 1 einen Rohkernförderer an einem Rohkern-Materialträgern und einer Apexmaschine;
Fig. 2 ein Verfahren zum Fördern von Rohkernen von Rohkern-Materialträgern an eine Apexmaschine.

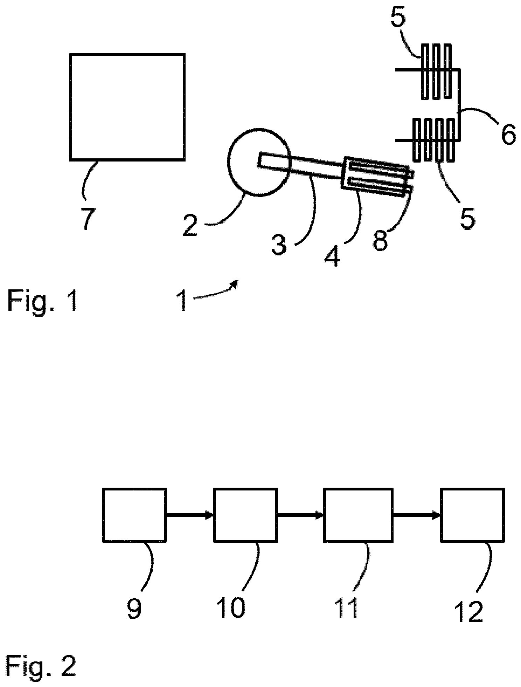

Figur 1 zeigt einen Rohkernförderer 1 mit einem Aktor 2 mit einer durch den Aktor 2 rotatorisch verfahrbar gelagerte Verfahreinheit 3, wobei die Verfahreinheit 3 eine Aufnahmeeinheit 4 aufweist und horizontal sowie vertikal und in der horizontalen schwenkbar zur restlichen Verfahreinheit 3 lagert. Die Aufnahmeeinheit 4 ist als ein Kettenspeicher ausgeführt, der Rohkerne 5 von einem Rohkern-Materialträgern 6 entnimmt, vereinzelt und einer Apexmaschine 7 zuführt. Hierzu weist die Aufnahmeeinheit 4 zwei in der horizontalen zueinander verfahrbare Kettenförderer 8 auf, deren Abstand zueinander automatisiert an die Durchmesser der Rohkerne anpassbar ist.

In Figur 2 ist ein Verfahren zum Fördern von Rohkernen 5 von Rohkern-Materialträgern 6 an eine Apexmaschine 7 dargestellt. Hierzu wird in einem ersten Schritt 9 ein Rohkern-Materialträger 6 bereitgestellt, dem darauffolgend in einem zweiten Schritt 10 von einem Rohkernförderer 1 Rohkerne 5 entnommen werden. Hierzu erkennen Sensoren des Rohkernförderers 1 die Position sowie den Durchmesser der Rohkerne 5, wobei mit einer Prozessoreinheit der Verfahrweg der Aufnahmeeinheit 4 und der zwei in der horizontalen zueinander verfahrbaren Kettenförderer 8 berechnet wird. Der Aktor 2 sowie die Verfahreinheit 3 werden zum Verfahren der Aufnahmeeinheit 4 entsprechend angesteuert. Die Rohkerne 5 werden auf der Aufnahmeeinheit 4 gelagert. In einem dritten Schritt 11 werden der Aktor 2 sowie die Verfahreinheit 3 zum Verfahren der Aufnahmeeinheit 4 an die Apexmaschine 7 angesteuert. Ist die Aufnahmeeinheit 4 an der Apexmaschine 7 positioniert, werden in einem vierten Schritt 12 die Rohkerne 5 und durch Antreiben der Aufnahmeeinheit 4, die als ein Kettenspeicher ausgeführt ist, an die Apexmaschine 7 übergeben, wobei die Apexmaschine 7 die Rohkerne 5 vereinzelt von der Aufnahmeeinheit 4 entnimmt. Sind alle auf dem Kettenspeicher aufgenommenen Rohkerne 5 an die Apexmaschine 7 übergeben, beginnt das Verfahren von vorne.

### Bezugszeichenliste

- 1: Rohkernförderer
- 2: Aktor
- 3: Verfahreinheit
- 4: Aufnahmeeinheit
- 5: Rohkern

- 6: Rohkern-Materialträger
- 7: Apexmaschine
- 8: Kettenförderer
- 9: erste Schritt
- 10: zweite Schritt

- 11: dritte Schritt
- 12: vierte Schritt

## Patentansprüche

1. Verfahren zum Fördern von Rohkernen (5) von einem Rohkern-Materialträger (6) an eine Apexmaschine (7), wobei die Rohkerne (5) dem Rohkern-Materialträger (6) entnommen werden und der Apexmaschine (7) zugeführt werden,
**dadurch gekennzeichnet, dass**
eine Verfahreinheit (3) die Rohkerne (5) dem Rohkern-Materialträger (6) entnimmt, und der Apexmaschine (7) zuführt.

2. Verfahren nach Anspruch 1, **dadurch gekennzeichnet, dass** die Verfahreinheit (3) horizontal und vertikal zu den Rohkern-Materialträgern (6) verfährt und bevorzugt automatisiert angepasst an eine variable Position der Rohkerne (5) verfährt.

3. Verfahren nach den Ansprüchen 1 oder 2, **dadurch gekennzeichnet, dass** die Verfahreinheit (3) mit Sensoren an die jeweilige Position der Rohkerne (5) anlernbar ist und bevorzugt die Ausrichtung der Rohkerne (5) automatisiert erfasst und einen Verfahrweg zum Aufnehmen der Rohkerne (5) berechnet.

4. Verfahren nach einem der vorangehenden Ansprüche, **dadurch gekennzeichnet, dass** die Verfahreinheit (3) eine Aufnahmeeinheit (4) aufweist, die zur Ausrichtung der Rohkerne (5) ausgerichtet wird.

5. Verfahren nach einem der vorangehenden Ansprüche, **dadurch gekennzeichnet, dass** eine Vielzahl von bevorzugt zumindest fünf Rohkernen (5), weiter bevorzugt zumindest zehn Rohkernen (5), die zumindest teilweise aneinander anhaften, auf der Aufnahmeeinheit (4) aufgenommen wird.

6. Verfahren nach einem der vorangehenden Ansprüche, **dadurch gekennzeichnet, dass** die Aufnahmeeinheit (4) zwei horizontal angeordnete parallele Aufnahmen aufweist, die in ihrem Abstand zueinander an die Rohkerndurchmesser angepasst werden.

7. Rohkernförderer (1) zum Fördern von Rohkernen (5) von Rohkern-Materialträgern (6) an eine Apexmaschine (7), insbesondere zum Ausführen eines Verfahrens nach einem der vorhergehenden Ansprüche, aufweisend eine an einem Aktor (2) gelagerte Verfahreinheit (3) zum Verfahren der Rohkerne (5), den Aktor (2) zum Verfahren der Verfahreinheit (3) sowie eine an der Verfahreinheit (3) angeordnete Aufnahmeeinheit (4) zum Fördern der Rohkerne (5).

8. Rohkernförderer (1) nach Anspruch 7, **dadurch gekennzeichnet, dass** die Aufnahmeeinheit (4) ein Kettenspeicher ist, der bevorzugt zwei relativ zueinander verfahrbare Kettenförderer (8) aufweist.

9. Rohkernförderer (1) nach Anspruch 7 oder 8, **dadurch gekennzeichnet, dass** die Verfahreinheit (3) horizontal in zwei voneinander unabhängige Raumrichtungen sowie vertikal antreibbar ist und bevorzugt in der Horizontalen zumindest in Teilbereichen schwenkbar gelagert und antreibbar ist.

10. Computerprogrammprodukt zum Fördern von Rohkernen (5) von Rohkern-Materialträgern (6) an eine Apexmaschine (7) mit einem Rohkernförderer (1), umfassend Befehle, die bei der Ausführung des Programms durch zumindest eine Prozessoreinheit diese veranlasst das Verfahren nach einem der Ansprüche 1 bis 6 auszuführen.
